# EUROPEAN PATENT APPLICATION

(11) **EP 2 119 657 A2**
(43) Date of publication of application: **18.11.2009**
(21) Application number: 09006208.4
(22) Date of filing: 07.05.2009
(51) Int. Cl.: B65H 35/00, B65H 37/04, B29C 65/50, B29C 65/18, D06H 5/00, A41D 27/04

(54) **Adhesive applying apparatus for applying an adhesive compound on fabric material pieces**

(30) Priority: 15.05.2008 IT MI20080884
(71) Applicant: MACPI PRESSING DIVISION S.P.A., 25036 Palazzolo Sull'Oglio BS (IT)
(72) Inventor: Cartabbia, Giovanni, 25036 Palazzolo Sull'Oglio BS (IT)
(74) Representative: Cicogna, Franco

(57) **Abstract**

An adhesive applying apparatus for applying an adhesive compound (2) on fabric material pieces comprises an adhesive compound supplying (3) and applying device (4), for applying an adhesive compound supported by a strip to one or more fabric pieces, by interexchangeable guide means (18,19,20,21).

## Description

### BACKGROUND OF THE INVENTION

The present invention relates to an adhesive applying apparatus for applying an adhesive compound either on one or two fabric pieces, in different operating manners, before bonding the fabric pieces by the adhesive compound.

As is known, in the garment field are increasingly required adhesive sealed cloth articles, instead of conventionally seamed garments.

However, the prior art does not provide apparatus and methods adapted to easily perform complex fabric piece assembling or bonding operations, by a quick and simple fabric piece sealing or bonding technique; on the contrary very long and expensive manual bonding operations, providing qualitatively poor results are usually required.

Applicant is not aware of presently available machines adapted to properly preparing cloth or garment articles to be sealed to one another.

### SUMMARY OF THE INVENTION

Accordingly, the aim of the present invention is to provide such an apparatus or machine adapted to properly prepare fabric pieces for performing thereon subsequent fabric piece sealing or "welding" operations.

Within the scope of the above mentioned aim, a main object of the invention is to provide such an apparatus adapted to deposit a preparing or starting adhesive on either one or two fabric pieces, by different depositing methods, before assembling the fabric pieces by adhesive compounds or means.

Another object of the present invention is to provide such an adhesive applying apparatus or machine which is very reliable from an operation standpoint, and which, in particular, is adapted to quickly and easily perform different types of fabric piece processing operations, depending on the types of the fabric material to be sealed.

Yet another object of the present invention is to provide such an apparatus or machine which, owing to its specifically designed constructional features, is very reliable and safe in operation.

According to one aspect of the present invention, the above mentioned aim and objects, as well as yet other objects, which will become more apparent hereinafter, are achieved by an adhesive applying apparatus for applying an adhesive compound either to one or to two fabric pieces, for preassembling said fabric pieces before thermosealing said fabric pieces, **characterized in that** said apparatus comprises means for supplying and applying, by interexchangeable guide means, an adhesive compound supporting strip to said one or two fabric pieces.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative example, in the accompanying drawings, where:

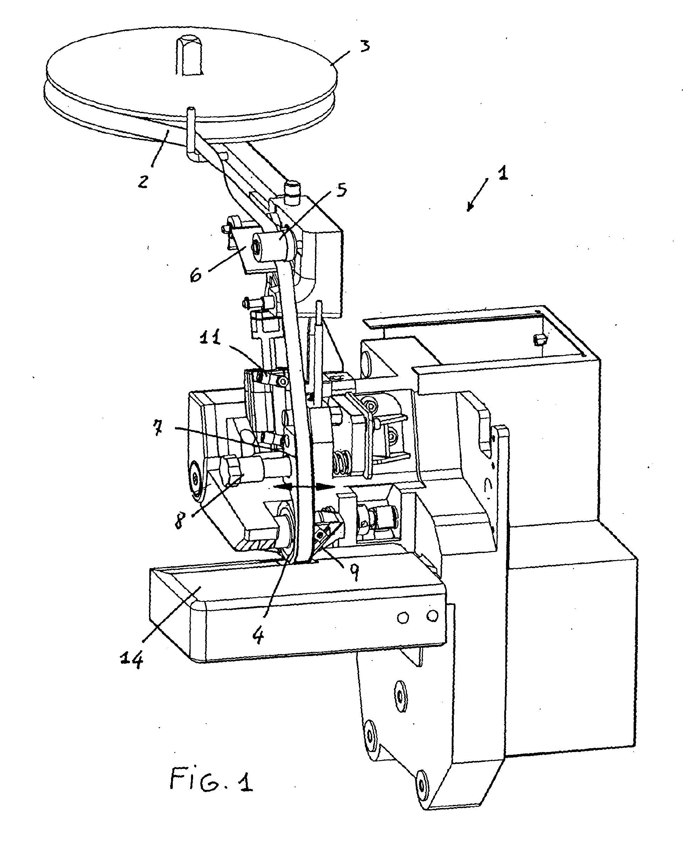

Figure 1 is a perspective view of the apparatus according to the present invention;

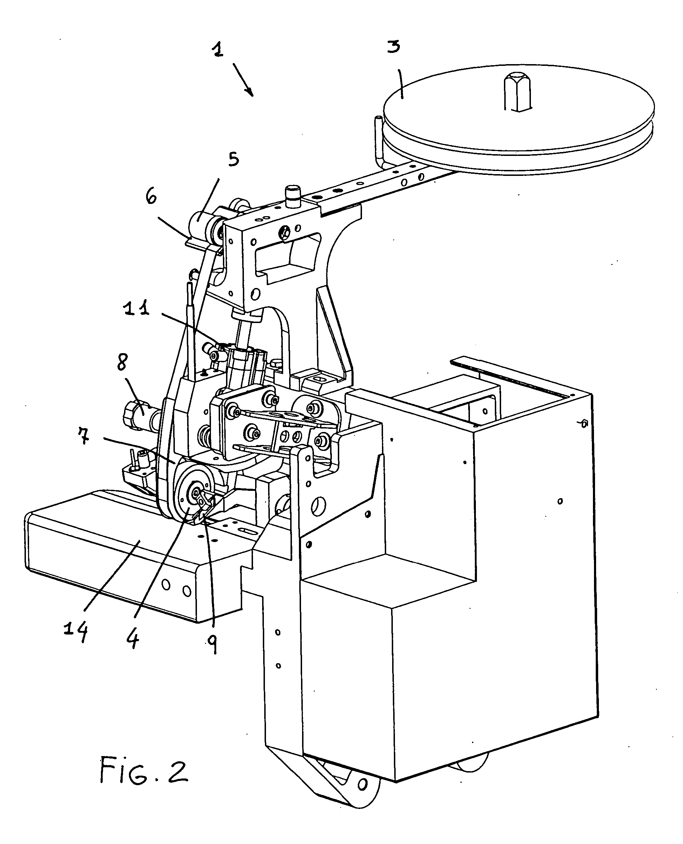

Figure 2 is a further perspective view of the apparatus according to the invention;

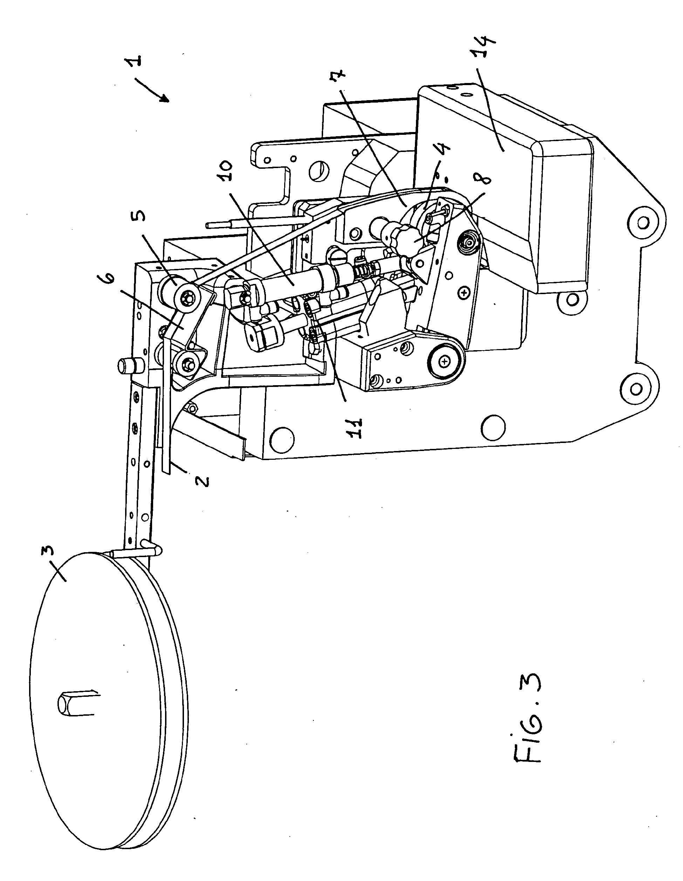

Figure 3 is yet another perspective view of the inventive apparatus, seen from a side opposite to that of figure 3;
Figures 4 to 6 show a first guide adapted to perform a simple operation for applying an adhesive compound to a fabric piece;
Figures 7 to 9 show a second guide designed for applying the adhesive compound to a fabric piece including a fabric piece edge or hem;
Figures 10 to 12 show a third guide designed for performing an offset preassembling of two fabric pieces by using the above adhesive compound;
Figures 13 to 15 show a fourth guide designed for performing a fabric piece top edge or hem portion offset preassembling operation; and
Figures 16 to 18 show a fifth guide designed for performing a fabric piece bottom edge or hem portion offset preassembling operation.

### DESCRIPTION OF THE PREFERRED EMBODIMENTS

With reference to the number references of the above mentioned figures, the apparatus according to the present invention, which has been generally indicated by the reference number 1, comprises a roll bearing assembly 3, thereon is wound an adhesive roll or coil including an adhesive compound supported by a paper or plastic strip, as generally indicated by the reference number 2.

Said adhesive strip 2 is held under tension, after having contacted a roller 5, by a pair of tension wheels operating as a friction clutch, and contacting a surface of a bearing plate 6.

In the figures only one of the two wheels, that is the top wheel, indicated by the reference number 4, has been shown.

Said adhesive strip is conveyed onto a heated guide 7, preferably provided with a chromium and a Teflon coated surface, thereby providing said heated guide 7 with good sliding properties, said heated guide being adapted to resist against operating temperatures from about 100°C to 250°C, and comprising preferably an electrically heated guide, including a sensing probe and an electric heating resistance, and being axially driven by a driving knob 8, which can be rotatively operated to perform a micrometric type of adjustment through a coil spring, designed for recovering possible operating clearances.

The two adhesive strip 2 driving wheels being supplied therebetween with the fabric piece or pieces.

According to one aspect of the invention, the two wheels are driven by separated driving units, thereby rotating either with equal or different peripheral speeds, to provide a differential effect.

Moreover, said two wheels are coated by a silicone electrically conductive compound, to prevent electrostatic charges from accumulating thereon.

More specifically, said wheels may have either a smooth or textured surface construction, depending on a pattern to be applied to the fabric pieces.

Of said wheels, the bottom wheel, not visible in the figures, rigidly supports thereon a rotary counter-blade element which, in combination with a swingably driven top knife 9, performs lateral trimming operations to remove exceeding fabric material, as necessary.

The top wheel 4, on the other hand is adapted to swing about a lateral or side pin, and can be raised to provide an adjustable pressure against the fabric material, the raising and lowering movement of the top wheel being driven by a pneumatic piston 10.

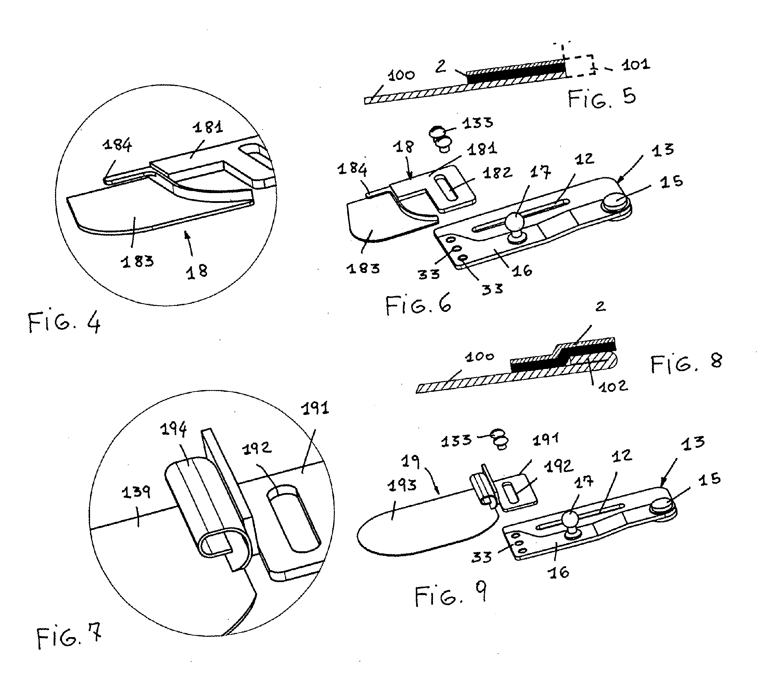

The inventive apparatus further comprises a second pneumatic piston 11, driving a knife element operating as a guillotine blade for cutting the adhesive strip 2, at the end of the adhesive strip applying operations, carried out by advantageously interexchangeable operating devices, which can be supported by a single supporting assembling, shown by the reference number 13 in figures 4-18 and comprising a plate-like element having longitudinal slots 12 for clamping, by clamping screws, said plate-like element on a supporting surface 14 at a set operating position.

Said plate-like element 13 comprises moreover an end pin 15, to which is coupled a rotary portion 16 including a knob 17 and a plurality of clamping holes 33 for clamping therein said several operating devices.

Figures 4 to 6 show a guide 18 for applying the adhesive compound to the fabric pieces, which guide 18 can be transversely adjusted with respect to supporting assembly 13, thereby precisely locating the fabric pieces.

As is schematically shown in figure 5, the apparatus applies the adhesive compound strip 2 on the edge of the fabric piece 100, while cutting away the exceeding fabric portion 101.

The cross-wise adjustable guide 18 comprises a bracket portion 181 including a notch 182 for clamping by clamping screws 133 said bracket portion to the support 13.

The bracket portion 181 extends on a curved blade portion 183, of substantially trapezium configuration, including a top blade element 184.

Figures 7 to 9 show a further guide 19 which can be adjusted cross-wise on the support 13 and being designed to applying the adhesive compound strip 2 to a hemmed fabric piece.

As is schematically shown in figure 8, the edge of the fabric piece 100 is pre-folded so as to form a fabric hem 102, with adhesive strip 2 arranged in a bridging relationship thereon.

The adjustable guide 19 comprises a bracket portion 191 including a notch 192 for clamping said bracket by clamping screws 133 to the supporting assembly 13.

The bracket portion 191 extends to an elongated blade portion 193, of substantially oval configuration, including a top blade element 194 cross-wise extending in the form of a loop.

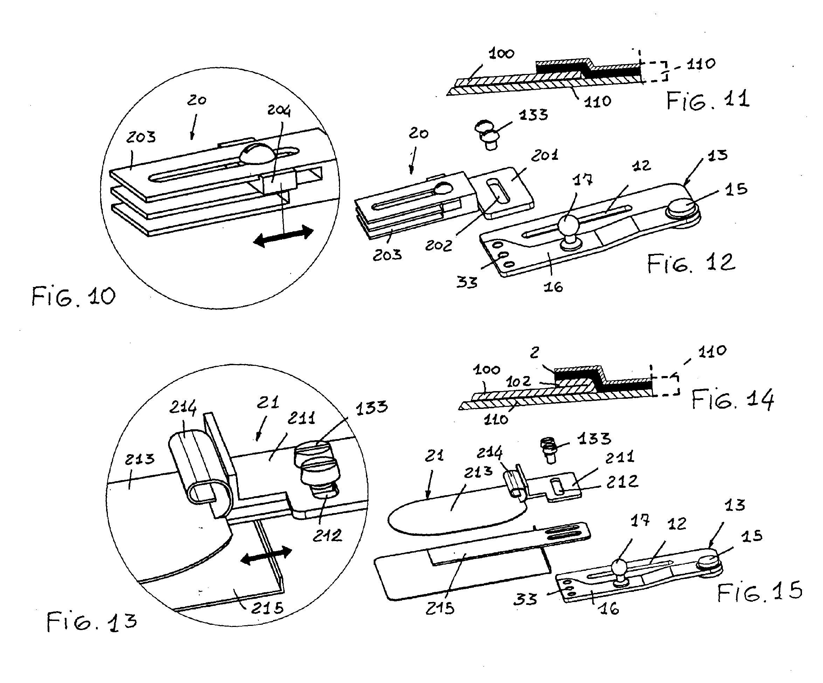

Figures 10 to 12 show a further guide 20 designed for performing an offset preassembling of two fabric pieces, by the adhesive compound strip 2.

More specifically, said guide 20 comprises a bracket portion 201, including a notch 202 for clamping by the clamping screws 133 said bracket to the supporting assembly 13.

Said bracket portion 201 extends to a portion including three blade elements 203, of substantially rectangular configuration, therebetween a stop abutment 204, which can be advantageously longitudinally adjusted, is arranged.

Figure 11 schematically shows a preassembling or pre-bonding operation for preassembling two fabric pieces 100 and 110 in an offset relationship.

Said guide allows, owing to its offset configuration, to introduce, between the two top and middle blade elements, a fabric piece 110, at a fixed trimming position, and, between the middle and top blade elements, a top fabric piece 100.

Said second fabric piece being arranged at a position offset from the first fabric piece, by said top abutment 204.

Figures 13 to 15 show a further guide 21 designed for performing a fabric piece top edge or hem portion offset preassembling, said guide 21 comprising two guide components, the first of which comprises a bracket portion 211 including a notch 212 for clamping by the clamping screws 133 said bracket to the supporting assembly 13.

The bracket portion 211 extends to an elongated blade portion 213, of substantially oval configuration, including a top blade element 214 cross-wise extending and forming a loop arrangement, for forming a hem portion 102 on the top fabric piece 100.

The second component of said guide 21 comprises a rectangular plate-like element 215, which can be adjustably clamped, at the bottom thereof, to the first component, to provide the desired offset relationship between the two fabric pieces.

As is schematically shown in figure 14, the adhesive strip 2 is arranged with a bridging relationship on the top fabric piece 100 and bottom fabric piece 110 hem 102.

In particular, the bottom fabric piece 110 is offset from the top fabric piece 100 by screwing off the clamping screws 133 for releasing the bottom plate-like element 215, thereby easily adjusting the offset of the bottom and top fabric pieces.

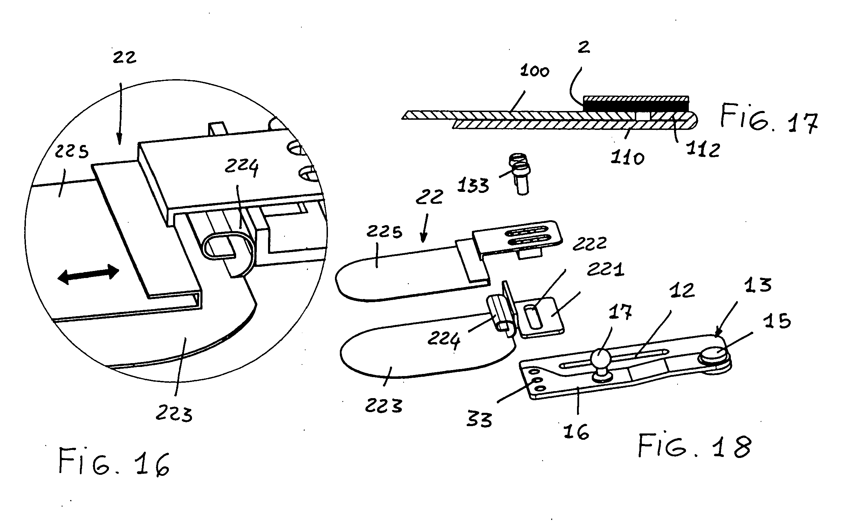

Figures 16 to 18 show a further guide 22, for offset preassembling the fabric piece hem portion, which guide 22 comprises two guide components, the first of which comprises a bracket portion 221 including a notch 222 for clamping by the clamping screws 133 said bracket 221 to the supporting assembly 13.

The bracket portion 221 extends to an elongated blade portion 223, of a substantially oval configuration, including a top blade element 224 extending cross-wise and forming a loop arrangement, forming a fabric hem portion 112 on the bottom fabric piece 110.

The second guide component comprises a plate-like element 225 which can be adjustably clamped on the top of the first component, thereby providing a desired offset relationship of the two fabric pieces.

As is schematically shown in figure 17, the bottom fabric piece 110 is hemmed by an upward directed upturned portion 112, whereas the top fabric piece 100 is offset from the bottom fabric piece 110, by a second guide component 215, forming a longitudinally adjustable reference guide, which can be longitudinally adjusted with respect to the bottom guide portion.

Thus, it is possible to adhesively connect a flat top fabric piece 100 to a hemmed upward turned bottom fabric piece 110.

It has been found that the invention fully achieves the intended aim and objects.

In fact, the invention provides an apparatus adapted to apply either to one or two fabric pieces an adhesive compound strip coupled to a silicone processed paper support, or to a plastic material support, which adhesive compound strip may have a variable width and thickness, the adhesive compound being selected depending on the fabric material to be assembled and thermosealed.

The inventive apparatus allows to apply an adhesive compound either to a fabric piece or to two fabric pieces, to preassemble said pieces before thermosealing them.

In practicing the invention, the used materials, as well as the contingent size and shapes, can be any, according to requirements.

## Claims

1. An adhesive applying apparatus for applying an adhesive compound either to one or to two fabric pieces, for preassembling said fabric pieces before thermosealing said fabric pieces, **characterized in that** said apparatus comprises means for supplying and applying, by interexchangeable guide means, an adhesive compound supporting strip to said one or two fabric pieces.

2. An adhesive applying apparatus, according to claim 1, **characterized in that** said interexchangeable guide means are mounted on a single supporting assembly.

3. An adhesive applying apparatus, according to claim 2, **characterized in that** said single supporting assembly comprises a plate element including a longitudinal slot allowing to clamp, by clamping screws, said plate element on a bearing surface.

4. An adhesive applying apparatus, according to claim 3, **characterized in that** said plate element comprises, at an end portion thereof, a pin to which is coupled a rotary portion including a knob and a plurality of clamping holes.

5. An adhesive applying apparatus, according to claim 1, **characterized in that** said interexchangeable guide means comprise a first guide for applying said adhesive compound strip to said fabric pieces.

6. An adhesive applying apparatus, according to claim 5, **characterized in that** said first guide is adjustable cross-wise of said supporting assembly, thereby precisely locating the fabric piece, to apply said adhesive compound strip on a hem portion of said fabric piece while cutting away any fabric piece exceeding portion, said first guide comprising a bracket portion including a notch for clamping by clamping screw said bracket portion to said supporting assembly, said bracket portion extending to a curved blade portion of substantially trapezoidal configuration and including a top blade element.

7. An adhesive applying apparatus, according to claim 1, **characterized in that** said interexchangeable guide means comprise a second interexchangeable guide for applying said adhesive compound strip to a hemmed fabric piece, said fabric piece including an edge which is pre-folded thereby forming a hem portion thereon is applied, with a bridging relationship, and adhesive compound strip.

8. An adhesive applying apparatus, according to claim 7, **characterized in that** said second interexchangeable guide comprises a bracket portion including a notch for clamping by clamping screws said bracket to said supporting assembly, said bracket portion extending to an elongated blade portion, of substantially oval configuration, including a top blade element cross-wise extending and forming a loop arrangement.

9. An adhesive applying apparatus, according to claim 1, **characterized in that** said interexchangeable guide means comprise of a third interexchangeable guide for offset preassembling said two fabric pieces by said adhesive compound strip.

10. An adhesive applying apparatus, according to claim 9, **characterized in that** said third interexchangeable guide comprises a bracket portion including a notch for clamping by clamping screws said bracket portion to said supporting assembly, said bracket portion extending to a blade portion including three blade elements, of substantially rectangular configuration, therebetween is adjustably arranged a longitudinally adjustable stop abutment, said third interexchangeable guide being so offset arranged as to introduce, between two top and middle blade elements, a first fabric piece at a fixed trimming position and, between two middle and top blade elements, a second fabric piece arranged at a position offset from said first fabric piece by said longitudinally adjustable stop abutment.

11. An adhesive applying apparatus, according to claim 1, **characterized in that** said interexchangeable guide means comprise a fourth interexchangeable guide for performing a fabric top hem offset preassembling operation.

12. An adhesive applying apparatus, according to claim 11, **characterized in that** said fourth interexchangeable guide comprises two guide components, a first component of said fourth guide comprising a bracket portion including a notch for clamping by clamping screws said bracket portion to said supporting assembly, said bracket portion extending to an elongated blade portion having a substantially oval configuration, including a top blade element cross-wise extending and forming a loop arrangement for providing a fabric hem portion on the top fabric piece; a second component of said fourth guide comprising a rectangular plate element to be adjustably clamped, at a bottom of said first component, to offset said two fabric pieces from one another, said adhesive compound strip being arranged with a bridging relationship on said hem portion of said top fabric piece and bottom fabric piece said bottom fabric piece being offset from said top fabric piece by screwing off said clamping screws thereby disengaging said bottom plate element.

13. An adhesive applying apparatus, according to claim 1, **characterized in that** said guide means comprise a fifth interexchangeable guide for performing a bottom fabric hem portion offset preassembling operation.

14. An adhesive applying apparatus, according to claim 13, **characterized in that** said fifth interexchangeable guide comprises two components, a first component of said fifth guide comprising a bracket portion including a notch for clamping by clamping screws said bracket portion to said supporting assembly, said bracket portion extending to an elongated blade portion of substantially oval configuration, including a top blade element cross-wise extending and forming a loop arrangement, for providing a fabric hem portion on the bottom fabric piece; a second component of said fifth guide comprising a plate element which can be adjustably clamped on said first component, to offset said two fabric pieces from one another, the bottom fabric piece being hemmed by an upward directed upturned portion, whereas the top fabric piece is offset from said bottom fabric piece, by the second component providing a longitudinally adjustable reference guide which can be longitudinally adjusted with respect to the bottom guide, thereby pre-applying said adhesive compound strip to said top fabric piece, the bottom fabric piece being hemmed and upward turned.

15. An adhesive applying apparatus, according to claim 1, **characterized in that** said apparatus comprises a roll bearing assembly thereon is wound an adhesive compound strip roll including said adhesive compound strip comprising a paper or plastic strip, said adhesive strip being held in tension by a pair of tension wheels operating as a friction clutch element and contacting a plate bearing surface.

16. An adhesive applying apparatus, according to claim 15, **characterized in that** said adhesive compound strip is conveyed on a heated guide, having a chromium and Teflon coated surface and being adapted to resist against operating temperatures from about 100°C to 250°C, said heated guide including a probe and an electric heating resistance.

17. An adhesive applying apparatus, according to claim 16, **characterized in that** said heated guide is axially driven by a micrometrically adjustable rotary knob, said knob including an operating clearance recovering coil spring.

18. An adhesive applying apparatus, according to claim 1, **characterized in that** said two adhesive compound strip driving wheels comprise independent driving units, thereby said wheels can rotate either with equal or different peripheral speeds, to provide a differential effect.

19. An adhesive applying apparatus, according to claim 18, **characterized in that** said two wheels are coated by an electrically conductive silicone mixture, to prevent electrostatic charges from accumulating on said two wheels.

20. An adhesive applying apparatus, according to claim 18, **characterized in that** said two wheels have either a smooth or a textured surface.

21. An adhesive applying apparatus, according to claim 18, **characterized in that** a bottom wheel of said two wheels rigidly supports a rotary counter-blade element which, in combination with a swingably driven top knife element for trimming an exceeding fabric material.

22. An adhesive applying apparatus, according to claim 18, **characterized in that** a top wheel of said two wheels is adapted to swing about a side pin and to be raised and lowered by a pneumatic piston to provide an adjustable pressure against said fabric pieces.

23. An adhesive applying apparatus, according to claim 22, **characterized in that** said apparatus further comprises a second pneumatic piston driving a knife element operating as a guillotine for cutting through the adhesive compound strip.
